# EUROPÄISCHE PATENTSCHRIFT

(11) **EP 1 966 507 B1**
(45) Veröffentlichungstag und Bekanntmachung des Hinweises auf die Patenterteilung: **02.12.2009**
(21) Anmeldenummer: 06841411.9
(22) Anmeldetag: 18.12.2006
(51) Int. Cl.: F16D 65/16, F16J 1/00

(54) **KOLBEN FÜR EINE HYDRAULISCHE BREMSE UND VERFAHREN ZUR HERSTELLUNG**
PISTON FOR A HYDRAULIC BRAKE AND METHOD FOR PRODUCTION THEREOF
PISTON POUR FREIN HYDRAULIQUE ET SON PROCEDE DE FABRICATION

(30) Priorität: 21.12.2005 DE 102005061354
(43) Veröffentlichungstag der Anmeldung: 10.09.2008
(73) Patentinhaber: Continental Teves AG & Co. oHG, 60488 Frankfurt (DE); SANDER UMFORMTECHNIK GMBH & CO. KG, 77871 Renchen/Ulm (DE)
(72) Erfinder: LEIDECKER, Hans-Dieter, 65760 Eschborn (DE); MEHNER, Götz, 61462 Königstein (DE); WÜRZ, Matthias, 61440 Oberursel (DE); LEIDECKER, Norbert, 65760 Eschborn (DE); ZEIBIG, Uwe, 77855 Achern (DE); BAUER, Herwig, 61118 Bad Vilbel (DE)
(86) Internationale Anmeldenummer: PCT/EP2006/069816
(87) Internationale Veröffentlichungsnummer: WO 2007/071640

(56) Entgegenhaltungen:
- WO-A-03/015980
- FR-A- 1 464 559
- JP-A- 1 091 930
- JP-A- 54 107 871
- US-A1- 5 105 917

## Beschreibung

Die Erfindung betrifft einen Kolben für eine hydraulische Bremse, welcher in Umformprozessen aus einem metallischen Ausgangswerkstoff, insbesondere aus einem ebenen Blech, hergestellt ist, und als einseitig offener, Topf mit einer Längsachse, einer Wandung und einem Boden gestaltet ist, und auf einer offenen Stirnseite von einem Rand mit einer axialen Anlagefläche begrenzt wird, welche an einen Bremsbelag anlegbar ist.

Ein solcher Kolben ist aus der WO 01/02745 A1 bekannt. Es handelt sich dabei um einen kaltverformten Kolben, der vorzugsweise Mittels Tiefziehverfahren hergestellt ist. Dieser ist im Vergleich zu gegossenen Kolben verhältnismäßig dünnwandig gestaltet, wobei der Ausgangswerkstoff, die Wandung und der Boden die gleiche geringe Wandstärke aufweisen. Damit sich der Boden bei einer Beaufschlagung mit einem unter Druck stehendem Druckmittel nicht verformt, ist er bezüglich einer Kolbenaußenseite konvex gewölbt, wodurch die Belastung Druckspannungen im Boden hervorrufen. Durch diese stabilisierende, konstruktive Gestaltung des Bodens ergibt sich zwischen Kolben und einem dazugehörigen Bremszylinder ein großer Totraum. Weiterhin werden die auf den Boden wirkenden Kräfte in die Wandung des Kolbens übertragen, wobei in einem Übergangsbereich zwischen Boden und Wandung erhöhte Spannungen entstehen. Zu deren Kompensation ist der Werkstoff an dieser Stelle mehrfach gefaltet. Dabei stellt sich als nachteilig heraus, dass die

Ein Kolben gemäss dem Oberbegriff des Anspruchs 1 geht z.B. aus FR-A-1 464 559 hervor. Faltung des Werkstoffs besonders aufwendig bezüglich der Gestaltung und kostenintensiv, insbesondere in Bezug auf das Herstellungswerkzeug, ist.

Aus der EP 1 414 613 B1 ist ein Verfahren zur Herstellung eines Kolbens für eine hydraulische Bremse bekannt, mit folgenden Schritten: Ausstanzen eines scheibenförmigen, runden Rohlings aus einem Ausgangswerkstoff einer bestimmten Dicke, insbesondere aus einem Stück Blech, Umformen des Rohlings in einen topfartigen Hohlzylinder mittels einer Matrize und eines Stempels und Formpressen des topfartigen Hohlzylinders zur Formung des Bodens mit einer bestimmten Wandstärke und einer zylindrischen wandung mit einer bestimmten Wandstärke. Dabei wird durch den durchgeführten Umformvorgang die Wandstärke des Kolbens gegenüber dem Ausgangswerkstoff stark verringert, insbesondere im Übergang von Boden und Wandung. Um eine ausreichende Kolbenwandstärke, das heißt Stabilität und Steifigkeit zu erreichen, muss ein verhältnismäßig dicker Ausgangswerkstoff gewählt werden, wodurch erhöhte Herstellungskosten entstehen.

Es ist eine Aufgabe der Erfindung einen Kolben anzugeben, der verbesserte hydraulische Eigenschaften aufweist und dabei auf einer spannungsoptimierten Konstruktion beruht, und weiterhin ein Verfahren zu dessen günstiger Herstellung anzuführen, welches geeignete spannungsoptimierte Konstruktionsmerkmale darstellen kann.

Die Aufgabe wird erfindungsgemäß mit den Merkmalen des Kennzeichens des Patentanspruchs 1 dadurch gelöst.

Durch die plane Außenfläche entsteht kein Totraum im Bremszylinder, wodurch die Menge des Fluids im hydraulischen Betätigungskreis reduziert ist, was die Steifigkeit und Dynamik des Betätigungskreises wesentlich verbessert. Die vorteilhaften Konstruktions-merkmale schützen den Boden bei Druckbeaufschlagung vor Verformungen und bewirken eine günstige Überführung der Zug- und Biegespannung des Bodens in Druckspannungen in die Wandung des Kolbens. Die Schräge hat dabei den Effekt, dass die mechanischen Spannungen des Bodens gleichmäßig über einen größeren Querschnitt in die Wandung abgeleitet werden können, wodurch eine Konzentration der Spannungen vermieden wird. Um Verformungen und Überbelastungen an der offenen Stirnseite des Kolbens zu verhindern, ist die Anlagefläche des Randes größer als eine Querschnittsfläche an der dünnsten Stelle der Wandung.

Eine vorteilhafte Weiterentwicklung der Erfindung beinhaltet, dass eine auf die Längsachse projizierte Länge der Schräge kleiner ist als die doppelte Wandstärke des Bodens. Diese geometrische Einschränkung bewirkt, dass einerseits eine günstige Spannungsführung im Kolben erreicht wird, so dass eine übermäßige Gewichtserhöhung des Kolbens durch eine unnötige Werkstoffaufdickung der Wandung vermieden wird.

Um den Übergang zwischen der Schräge und der Wandung beanspruchungsgerecht darzustellen, ist die Schräge gegenüber der Längsachse des Kolbens mit einem Winkel α größer 1° Grad geneigt.

In einer weiteren Ausführung der Erfindung ist zwischen der Schräge und dem Boden eine Abrundung vorgesehen. Diese Maßnahme dient der beanspruchungsgerechten Gestaltung des Kolbens. Dabei wirkt sich besonders vorteilhaft aus, wenn die Abrundung zumindest teilweise als Ausnehmung im Werkstoff des Bodens ausgebildet ist, so dass an dieser Stelle eine Wandstärke des Bodens reduziert ist. Besonders die Verringerung der Wandstärke des Bodens im Übergang zwischen Schräge und Boden bewirkt, dass oberflächennahe Zugspannungen über den gesamten Bauteilquerschnitt des Bodens verteilt werden, wodurch die Schräge entlastet wird.

Dieser Effekt wird dadurch unterstützt, dass der Übergang mit einem Radius versehen ist, und dass dieser Radius kleiner als die Wandstärke des Bodens ist.

Die Herstellungskosten werden reduziert, indem die Wandstärke des Bodens durch die Umformprozesse um mehr als das 1,1-fache der Dicke des Ausgangswerkstoffs zunimmt. Dadurch kann ein Ausgangswerkstoff mit geringer Dicke verwendet werden. Weiterhin kann der Ausgangswerkstoff verhältnismäßig weich sein, da der Boden durch die Umformprozesse eine Kaltverfestigung erhält, die um mehr als das 1,3-fache über der Festigkeit des Ausgangswerkstoffs liegt. Beide Merkmale führen zu niedrigeren Herstellungskosten und Werkzeugkosten.

Ein Verfahren zur Herstellung eines Kolbens beinhaltet folgende Schritte:
- Umformen eines scheibenförmigen, runden Rohlings in einen napfartigen Hohlzylinder mit einer Längsachse, wobei eine Stirnseite des Hohlzylinders von einem konvex gewölbten Boden verschlossen ist,
- Stauchen des Hohlzylinders in seiner Längsachse in einem oder mehreren Umformschritten, so dass der konvex gewölbte Boden geebnet und durch die Stauchung der Bodenwerkstoff aufgedickt wird, und dadurch die Wandstärke des fertigen Bodens um mehr als das 1,1-fache im Verhältnis zum Ausgangswerkstoff zunimmt.
Bei Anwendung dieses Verfahrens wird in vorteilhafter Weise die Steigerung der Wandstärke des Bodens durch die Stauchung des Bodens erreicht, ohne dass dabei der gesamte Hohlzylinder im Wesentlichen mit einbezogen ist. Der Boden und der Übergangsbereich vom Boden in die Wandung erfahren dabei eine Kaltverfestigung durch Umformung. Dadurch kann die Dicke des Ausgangswerkstoffs verringert werden, wodurch der Verschnitt an Rohmaterial geringer ausfällt und so die Herstellungskosten sinken.

Besonders günstig ist dieses Verfahren, wenn durch einen oder mehrere abstreckenden Umformschritt ein Randbereich des gestauchten Bodens in die Wandung übergeht und dadurch eine Aufdickung der Wandung im Übergangsbereich erzeugt wird.

Weitere Einzelheiten der Erfindung gehen aus den Zeichnungen anhand der Beschreibung hervor.

In den Zeichnungen zeigt
- Fig. 1: einen erfindungsgemäßen Kolben im Schnitt,
- Fig. 2: einen vergrößerten Ausschnitt des Kolbens aus Fig. 1 und
- Fig. 3: von a) bis f) die wichtigsten Schritte des gesamten Umformprozesses.

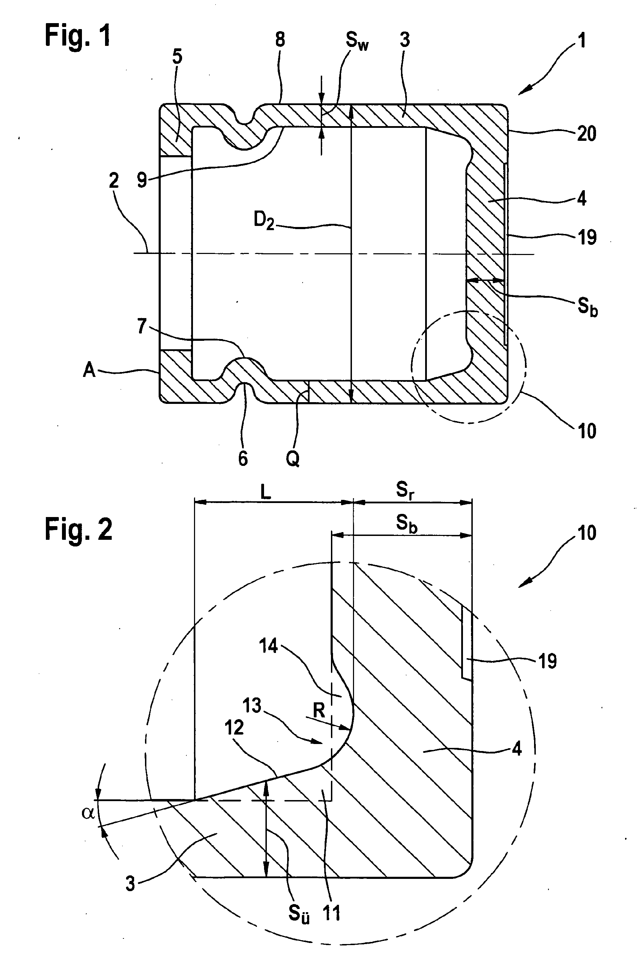

In Fig. 1 ist ein erfindungsgemäßer Kolben 1 im Längsschnitt dargestellt. Dieser um eine Längsachse 2 rotationssymetrisch ausgeführte Kolben 1 ist als einseitig offener Topf mit einer Wandung 3 und einem Boden 4 gestaltet, wobei er auf einer offenen Stirnseite von einem Rand 5 mit einer axialen Anlagefläche A begrenzt wird, die an einen nicht dargestellten Bremsbelag anlegbar ist. Der Rand 5 ist einstückig an der Wandung 3 angeformt, wobei die Anlagefläche A größer ist als eine Querschnittsfläche Q an der schwächsten Stelle der Wandung 3. Zudem ist in einer Außenseite 8 des Kolbens 1 nahe dem Rand 5 eine umlaufende Nut 6 einrolliert, welche im verbauten Zustand zur Aufnahme eines nicht dargestellten Dichtungsrings dient. Die Kontur der einrollierten Nut setzt sich durch den gesamten Querschnitt der Wandung 3 fort und verursacht so auf einer Innenseite 9 des Kolbens 1 eine Schulter 7. An dieser Schulter 7 verklemmen sich Belaghaltefedern einer Rückenplatte eines nicht dargestellten Bremsbelags, womit dieser am Kolben 1 fixiert wird. In einer planen Außenfläche 20 des Bodens 4 ist ein minimaler Totraum 19 eingeprägt, wodurch sich eine Entlüftung des hydraulischen Systems verbessert.

Dort wo die Wandung 3 in den Boden 4 übergeht, ist ein Übergangsbereich 10 vorhanden, der in Fig. 2 vergrößert dargestellt ist. An der Innenseite 9 des Kolbens 1 ist am Übergangsbereich 10 eine Werkstoffaufdickung 11 der Wandung 3 vorgesehen. Diese ist derart ausgebildet, dass eine dortige Wandstärke S_ü der Wandung 3 zum Boden 4 hin zunimmt und so die Wandung 3 mit einer Schräge 12 in den Boden 4 übergeht. Dabei nimmt die Schräge 12 gegenüber der Längsachse 2 des Kolbens 1 einen Winkel α von mehr als 1° Grad ein. Da die Werkstoffaufdickung 11 und die davon gebildete Schräge 12 der Optimierung des Spannungsverlaufs im Übergangsbereich 10 dienen, ist es sinnvoll die Größe der Schräge 12 auf den Übergangsbereich 10 zu begrenzen, um nicht das Gewicht des Kolbens 1 durch unnötigen Werkstoffeinsatz zu erhöhen.

Deshalb ist die auf die Längsachse 2 projizierte Länge L der Schräge kleiner als die doppelte Wandstärke S_b des Bodens 4 und liegt optimaler Weise in der Größenordnung der Wandstärke S_b des Bodens 4. Weiterhin ist zwischen der Schräge 12 und dem Boden 4 eine Abrundung 13 vorgesehen, die teilweise als Ausnehmung 14 im Werkstoff des Bodens 4 ausgebildet ist. Diese Einprägung in den Kolbenboden hat zur Folge, dass an dieser Stelle des Bodens 4 eine, im Gegensatz zur Wandstärke S_b, verminderte Wandstärke S_r vorliegt. Im Detail ist die Abrundung 13 mit einem Radius R versehen, wobei dieser Radius R kleiner als die Wandstärke S_b des Bodens 4 ist. Es ist aber auch denkbar den Übergang von der Schräge in den Boden ohne Ausnehmung und mit einem variablen Radius zu gestalten.

Durch die Umformprozesse nimmt die Wandstärke des Bodens um vorzugsweise etwa das 1,1- bis 1,6-fache der Dicke s_0 des Ausgangswerkstoffs zu, und der Boden verfestigt sich etwa 1,3-fach relativ zum Ausgangswerkstoff. Je nach Umformprozess kann der Boden auch eine höhere Festigkeit nach dem Umformen aufweisen, insbesondere das 1,3- bis 2,5-fache des Ausgangswerkstoffs.

Ein solcher Kolben 1 wird in hydraulischen Bremssystemen verwendet, wobei er in einer Bohrung eines Bremssattels axial verschiebbar gelagert ist, und der Kolbenboden in der Bohrung mit einem hydraulischen Fluid beaufschlagbar ist. Wird die Bremse betätigt, so verschiebt sich der Kolben ob der Druckbeaufschlagung und schiebt einen Bremsbelag gegen eine Bremsscheibe. Dies verursacht so eine Normalkraft zwischen Bremsscheibe und Bremsbelag, sowie eine Reibkraft.

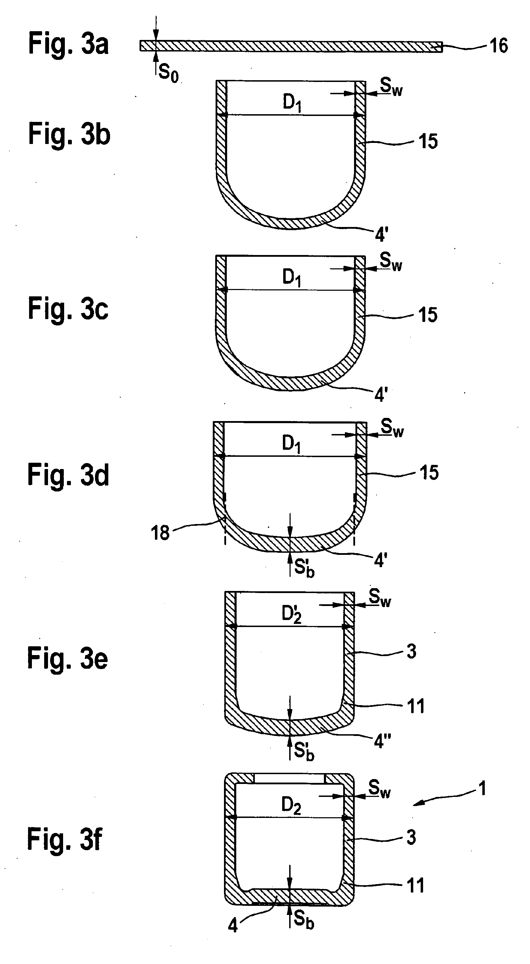

Die Herstellung des vorliegenden Kolbens erfolgt mittels Umformungen, insbesondere Kaltumformungen. Die wichtigsten Schritte des gesamten Umformprozesses sind in Fig. 3a-f gezeigt. Aus einem Ausgangswerkstoff, welcher vorzugsweise Blech ist und das meist in gewalzten Bändern vorliegt, wird ein scheibenförmiger Rohling 16 gestanzt. Die Dicke S_0 des Rohlings 16 ist dabei gleich der Dicke des Ausgangswerkstoffs. (Fig. 3a)

In einem oder mehreren Tiefziehvorgängen wird aus dem scheibenförmigen Rohling 16 ein napfartiger Hohlzylinder 15 mit einem Außendurchmesser D1 geformt, der auf einer Stirnseite von einem konvex gewölbten, halbkugelähnlichen Boden 4' verschlossen ist. Dabei ist die Wandstärke S_w des Hohlzylinders 15 im Wesentlichen gleich der Dicke S_0 des Rohlings 16, und der Außendurchmesser D1 größer als der Außendurchmesser D2 des fertigen Kolbens 1. (Fig. 3b) In Fig. 3c, 3d und 3e ist schematisch dargestellt, wie die Umformung und Aufdickung des konvex gewölbten, halbkugelähnlichen Bodens 4' erfolgt. Dies wird erreicht, indem der Boden 4' in sich gestaucht wird. Auf diese Weise kommt es zu einer Werkstoffanhäufung im Bodenbereich. Der Boden 4' mit der Wandstärke S_b' wird abgeflacht, wobei dieser noch nicht eben ist. Durch Abstreckziehen wird der Außendurchmesser D1 auf D2' verringert. Dadurch geht der radiale Randbereich 18 des unfertigen Bodens 4' in die Wandung über und erzeugt dort die Werkstoffaufdickung 11. In weiteren kalibrierenden und streckenden Umformschritte bekommt der Kolben 1 seine endgültige, ebene Form mit dem Außendurchmesser D2, der Wandstärke S_w der Wandung 3 und der Wandstärke S_b des geebneten Bodens 4. Durch geeignete zusätzliche Umformschritte besteht zudem die Möglichkeit, die Wandstärke der S_w zu verringern, und so die Wandung den Anforderungen des Kolbens anzupassen.

### Bezugszeichenliste

- 1: Kolben
- 2: Längsachse
- 3: Wandung
- 4: Boden
- 4': Boden
- 4": Boden
- 5: Rand
- 6: Nut
- 7: Schulter
- 8: Außenseite
- 9: Innenseite
- 10: Übergangsbereich
- 11: Werkstoffaufdickung
- 12: Schräge
- 13: Abrundung
- 14: Ausnehmung
- 15: Hohlzylinder
- 16: Rohling
- 17: Außenfläche
- 18: Radialer Randbereich
- 19: Totraum
- 20: Außenfläche

- A: Anlagefläche
- L: Projizierte Länge der Schräge 12
- Q: Querschnittsfläche
- D1: Außendurchmesser des unfertigen Kolbens
- D2': Außendurchmesser des unfertigen Kolbens
- D2: Außendurchmesser des Kolbens
- R: Radius im Übergang Schräge-Boden
- S_0: Dicke des Ausgangswerkstoffs
- S_w: Wandstärke der Wandung
- S_b: Wandstärke des Bodens
- S_b': Wandstärke des unfertigen Bodens
- S_r: Verminderte Wandstärke des Bodens
- S_ü: Wandstärke der Wandung im Übergangsbereich
- α: Winkel

## Patentansprüche

1. Kolben für eine hydraulische Bremse,
- welcher in Umformprozessen aus einem metallischen Ausgangswerkstoff, insbesondere aus einem ebenen Blech, hergestellt ist,
- und als einseitig offener, Topf mit einer Längsachse (2), einer Wandung (3) und einem Boden (4) gestaltet ist,
- und auf einer offenen Stirnseite von einem Rand (5) begrenzt wird,
- und an einem Übergangsbereich (10) zwischen Boden (4) und Wandung (3) eine Wandstärke (S_ü) der Wandung (3) zum Boden (4) hin kontinuierlich zunimmt, so dass die Wandung (3) mit einer Schräge (12) in den Boden (4) übergeht, **dadurch gekennzeichnet dass**
- eine Wandstärke (S_b) des Bodens (4) größer als eine minimale Wandstärke (S_w) der Wandung (3) ausgebildet ist, und
- zwischen Rand (5) und einem Bremsbelag eine Anlagefläche (A) definiert ist, die größer als eine Querschnittsfläche (Q) an einer schwächsten Stelle der Wandung (3) ausgebildet ist, und wobei der Boden (4) auf einer Außenseite (8) einen eingeprägten Totraum (19) aufweist.

2. Kolben für eine hydraulische Bremse nach Anspruch 1, **dadurch gekennzeichnet, dass** eine auf die Längsachse (2) projizierte Länge (L) der Schräge (12) kleiner ist als die doppelte Wandstärke (S_b) des Bodens (4).

3. Kolben für eine hydraulische Bremse nach Anspruch 1, **dadurch gekennzeichnet, dass** die Schräge (12) gegenüber der Längsachse (2) des Kolbens (1) mit einen Winkel (α) größer 1° Grad geneigt ist.

4. Kolben für eine hydraulische Bremse nach Anspruch 1, **dadurch gekennzeichnet, dass** zwischen Schräge (12) und Boden (4) eine Abrundung (13) vorgesehen ist.

5. Kolben für eine hydraulische Bremse nach Anspruch 4, **dadurch gekennzeichnet, dass** die Abrundung (13) teilweise als Ausnehmung (14) im Werkstoff des Bodens (4) ausgebildet ist, so dass an dieser Stelle eine Wandstärke (Sr) des Bodens (4) reduziert ist.

6. Kolben für eine hydraulische Bremse nach Anspruch 4, **dadurch gekennzeichnet, dass** die Abrundung (13) mit einem Radius (R) versehen ist, und dass dieser Radius (R) kleiner als die Wandstärke (S_b) des Bodens (4) ist.

7. Kolben für eine hydraulische Bremse nach Anspruch 1, **dadurch gekennzeichnet, dass** die Wandstärke (S_b) des Bodens (4) durch die Umformprozesse um mehr als das 1,1-fache der Dicke (S_0) des Ausgangswerkstoffs (16) zunimmt.

8. Kolben für eine hydraulische Bremse nach Anspruch 1, **dadurch gekennzeichnet, dass** der Boden (4) durch die Umformprozesse eine Kaltverfestigung erhält, die mehr als das 1,3-fache der Festigkeit des Ausgangswerkstoffs (16) beträgt.

9. Verfahren zur Herstellung eines Kolbens für eine hydraulische Bremse, nach einem oder mehreren der vorangestellten Ansprüche, **gekennzeichnet durch** die Schritte:
- Umformen eines scheibenförmigen, runden Rohlings (16) in einen topfartigen Hohlzylinder (15) mit einer Längsachse (2), wobei eine Stirnseite des Hohlzylinders (15) von einem konvex gewölbten Boden (4') verschlossen ist,
- Stauchen des Hohlzylinders (15) in seiner Längsachse (2) in einem oder mehreren Umformschritten, so dass der konvex gewölbte Boden (4',4") geebnet und **durch** die Stauchung der Bodenwerkstoff aufgedickt wird, und **dadurch** die Wandstärke (S_b) des fertigen Bodens (4) um mehr als das 1,1-fache im Verhältnis zum Ausgangswerkstoff (16) zunimmt.

10. Verfahren nach Anspruch 9 **dadurch gekennzeichnet, dass** durch einen oder mehrere Umformschritte ein radialer Randbereich (18) des gestauchten Bodens (4') in die Wandung (3) übergeht und **dadurch** eine Aufdickung der Wandung (3) im Übergangsbereich (10) erzeugt wird.

## Claims

1. Piston for a hydraulic brake,
- which is manufactured in forming processes from a metallic base material, in particular from plane sheet metal,
- and is configured as a bowl, open on one side, with a longitudinal axis (2), a wall (3) and a bottom (4),
- and is delimited on an open end face by a rim (5),
- and at a transition area (10) between bottom (4) and wall (3), a wall thickness (S_ü) of the wall (3) is continuously increasing towards the bottom (4) so that the wall (3) with a slope (12) passes over into the bottom (4).
**characterized in that**
- a wall thickness (S_b) of the bottom (4) is thicker than a minimum wall thickness (S_w) of the wall (3), and
- a contact face (A) is defined between the edge (5) and a brake lining, which contact face (A) is configured to be greater than a cross-sectional face (Q) at a weakest point of the wall (3), and the bottom (4) having an embossed dead space (19) on an outer side (8).

2. Piston for a hydraulic brake according to Claim 1, **characterized in that** a length (L) of the slope (12) projected to the longitudinal axis (2) is smaller than the double wall thickness (S_b) of the bottom (4).

3. Piston for a hydraulic brake according to Claim 1, **characterized in that** the slope (12) is inclined relative to the longitudinal axis (2) of the piston (1) at an angle (α) greater than 1° degree.

4. Piston for a hydraulic brake according to Claim 1, **characterized in that** a rounded portion (13) is provided between the slope (12) and the bottom (4).

5. Piston for a hydraulic brake according to Claim 4, **characterized in that** the rounded portion (13) is designed partly as a recess (14) in the material of the bottom (4) so that a wall thickness (Sr) of the bottom (4) is reduced at this point.

6. Piston for a hydraulic brake according to Claim 4, **characterized in that** the rounded portion (13) has a radius (R), and **in that** this radius (R) is smaller than the wall thickness (S_b) of the bottom (4).

7. Piston for a hydraulic brake according to Claim 1, **characterized in that** the wall thickness (S_b) of the bottom (4), as a result of the forming processes, increases by more than 1.1 times the thickness (S_0) of the base material (16).

8. Piston for a hydraulic brake according to claim 1, **characterized in that** the bottom (4) undergoes cold work hardening as a result of the forming processes, which amounts to more than 1.3 times the strength of the base material (16).

9. Method for manufacturing a piston for a hydraulic brake according to one or more of the preceding claims,
**characterized by** the following steps:
- forming a disc-shaped round blank (16) into a bowl-type hollow cylinder (15) with a longitudinal axis (2), with one frontal end of the hollow cylinder (15) being closed by a convexly curved bottom (4'),
- upsetting the hollow cylinder (15) in its longitudinal axis (2) in one or more forming steps so that the convexly curved bottom (4', 4") is rendered plane and the bottom material is thickened by the upsetting operation, with the result that the wall thickness (S_b) of the ready-made bottom (4) increases by more than 1.1 times in relation to the base material (16).

10. Method according to Claim 9,
**characterized in that** due to one or more forming steps a radial fringe area (18) of the upset bottom (4') passes over into the wall (3) and the wall (3) is thickened in the transition area (10) as a result.

## Revendications

1. Piston pour un frein hydraulique,
- qui est fabriqué dans des processus de façonnage à partir d'un matériau de départ métallique, en particulier à partir d'une tôle plane,
- et qui est configuré sous forme de pot ouvert d'un côté, avec un axe longitudinal (2), une paroi (3) et un fond (4),
- et qui est limité, sur un côté frontal ouvert, par un bord (5),
- et une épaisseur de paroi (S_ü) de la paroi (3) augmentant en continu jusqu'au fond (4) au niveau d'une région de transition (10) entre le fond (4) et la paroi (3), de sorte que la paroi (3) se prolonge par un biseau (12) dans le fond (4),
**caractérisé en ce que**
- une épaisseur de paroi (S_b) du fond (4) est supérieure à une épaisseur de paroi minimale (S_w) de la paroi (3) et
- entre le bord (5) et une garniture de frein est définie une surface d'appui (A) qui est supérieure à une surface en section transversale (Q) au niveau d'un point le plus faible de la paroi (3), et le fond (4) présentant sur un côté extérieur (8) un espace mort renfoncé (19).

2. Piston pour un frein hydraulique selon la revendication 1, **caractérisé en ce qu'**une longueur (L) du biseau (12) projetée sur l'axe longitudinal (2) est inférieure au double de l'épaisseur de paroi (S_b) du fond (4).

3. Piston pour un frein hydraulique selon la revendication 1, **caractérisé en ce que** le biseau (12) est incliné par rapport à l'axe longitudinal (2) du piston (1) avec un angle (α) supérieur à 1°.

4. Piston pour un frein hydraulique selon la revendication 1, **caractérisé en ce que** l'on prévoit entre le biseau (12) et le fond (4) un arrondi (13).

5. Piston pour un frein hydraulique selon la revendication 4, **caractérisé en ce que** l'arrondi (13) est réalisé partiellement en tant qu'évidement (14) dans le matériau du fond (4), de sorte qu'à cet endroit une épaisseur de paroi (Sr) du fond (4) soit réduite.

6. Piston pour un frein hydraulique selon la revendication 4, **caractérisé en ce que** l'arrondi (13) est pourvu d'un rayon (R) et **en ce que** ce rayon (R) est inférieur à l'épaisseur de paroi (S_b) du fond (4).

7. Piston pour un frein hydraulique selon la revendication 1, **caractérisé en ce que** l'épaisseur de paroi (S_b) du fond (4) augmente par le processus de façonnage de plus de 1,1 fois l'épaisseur (S_0) du matériau de départ (16).

8. Piston pour un frein hydraulique selon la revendication 1, **caractérisé en ce que** le fond (4) acquiert sous l'effet des processus de façonnage un écrouissage qui a plus de 1,3 fois la solidité du matériau de départ (16).

9. Procédé de fabrication d'un piston pour un frein hydraulique selon l'une quelconque ou plusieurs des revendications précédentes, **caractérisé par** les étapes suivantes :
- façonnage d'une ébauche ronde en forme de disque (16) dans un cylindre creux en forme de pot (15) avec un axe longitudinal (2), un côté frontal du cylindre creux (15) étant fermé par un fond de courbure convexe (4'),
- déformation par compression du cylindre creux (15) dans son axe longitudinal (2) dans une ou plusieurs étapes de façonnage, de sorte que le fond de courbure convexe (4', 4") soit aplani et épaissi par la déformation par compression du matériau du fond, et de ce fait l'épaisseur de paroi (S_b) du fond fini (4) augmente de plus de 1,1 fois par rapport au matériau de départ (16).

10. Procédé selon la revendication 9, **caractérisé en ce qu'**une région de bord radiale (18) du fond déformé par compression (4') se prolonge dans la paroi (3) par une ou plusieurs étapes de façonnage, et **en ce que** l'on produit ainsi un épaississement de la paroi (3) dans la région de transition (10).
